# EUROPEAN PATENT SPECIFICATION

(11) **EP 1 179 405 B1**
(45) Date of publication and mention of the grant of the patent: **13.10.2004**
(21) Application number: 01306759.0
(22) Date of filing: 07.08.2001
(51) Int. Cl.: B29C 45/17, B29C 45/00

(54) **Injection moulding method**
Spritzgiessverfahren
Procédé de moulage par injection

(30) Priority: 11.08.2000 JP 2000244610
(43) Date of publication of application: 13.02.2002
(73) Proprietor: Munekata Co., Ltd., Fukushima-shi (JP)
(72) Inventor: Tsuchiya, Atsushi, Tohoku Munekata Co. Ltd, Fukushima-shi, Fukushima-ken, 960-8506 (JP); Tateyama, Hirofumi, Tohoku Munekata Co. Ltd, Fukushima-shi, Fukushima-ken, 960-8506 (JP)
(74) Representative: King, James Bertram

(56) References cited:
- EP-A- 0 826 477
- EP-A- 0 914 919
- US-A- 5 993 723
- PATENT ABSTRACTS OF JAPAN vol. 1998, no. 9, 31 July 1998 (1998-07-31) & JP 10 100184 A (ASAHI CHEM IND CO LTD), 21 April 1998 (1998-04-21)
- PATENT ABSTRACTS OF JAPAN vol. 1999, no. 14, 22 December 1999 (1999-12-22) & JP 11 245257 A (ASAHI CHEM IND CO LTD), 14 September 1999 (1999-09-14)
- PATENT ABSTRACTS OF JAPAN vol. 1999, no. 14, 22 December 1999 (1999-12-22) & JP 11 245256 A (ASAHI CHEM IND CO LTD), 14 September 1999 (1999-09-14)
- PATENT ABSTRACTS OF JAPAN vol. 1999, no. 1, 29 January 1999 (1999-01-29) & JP 10 286840 A (ASAHI CHEM IND CO LTD), 27 October 1998 (1998-10-27)

## Description

This invention relates to an injection moulding method. More specifically, this invention relates a moulding method for improving the surface finish of products produced by a die as well as improving the gloss of the surface of moulded products.

In injection moulding of thermoplastics resin, generally, molten resin is injected into the cavity of a die, and the resin is cooled in the die to obtain a moulded product having the same shape as the cavity. In this injection moulding process, as the die is maintained at a lower temperature than the setting temperature of the resin, when the molten resin is injected in the cavity of the die, setting of the resin starts and proceeds immediately and a so-called skin layer, formed by the setting layer, is formed on the surface of the molten resin. Flow lines of the molten resin are transferred onto the surface of the moulded product because the flow is like a stream. As setting proceeds the resin is pressed against the die surface only under low pressure, producing surface defects in the moulded product and non-uniformity of the flow due to progressive setting of the resin. Jetting may also occur. In conventional technology the melt temperature of the resin and the temperature of the die are set to higher values to prevent the resin from being solidified prematurely and to improve the transcription from the mould to the article.

With this method, however, the transcription is improved, but sink marks and warping can easily occur due to non-uniformity in setting and shrinkage of the resin, so it is difficult to control the moulding process. In addition, the moulding cycle time becomes longer, which results in the higher cost of the moulded product.

To solve the problems described above, there has been proposed a method of heating a surface of a die to control setting of the molten resin by making use of a heater, heated oil, heated water, or heat of the molten resin itself occurring in the injection moulding process. With this method, however, the transcription is improved but a specific facility is required and the moulding cycle time becomes longer.

As a method capable of overcoming the problems as described above and also of improving the transcription, JP-A-10-128783 proposes an injection moulding method wherein before resin is injected into a cavity of a die, an inactive gas such as a carbon dioxide gas is injected in the cavity followed by injection of the thermoplastic resin. With this method, however, the resin flows while the inactive gas such as a carbon dioxide gas is dissolved in the resin. So the flow is unstable, and sometimes the surface of the moulded product may have a defect because of not-uniform flow of the resin and non-uniformity in the flow rate of the resin. Further as a resin is injected in a pressurised cavity space, sometimes insufficient filling may occur in the moulded product. And it is difficult to control gas exhausting. US-A-5 993 723 discloses a method wherein nitrogen is injected into a mould to avoid shrinkage in parts of a moulded product.

It is an object of the invention to provide an injection moulding method which reduces the risk of cosmetic defects and offers improved transcription and surface gloss, reduction of mould deformities flow marks and a reduction of flow mark lines in the resin and a gas marks produced by the gas injection.
According to this invention there is provided a process for improving the surface finish of an injection moulded plastics product wherein a molten plastics resin is injected into the cavity of a heated moulding die, the die thereafter being cooled and the resin allowed to set after which the product is removed form the die, and wherein after injecting the resin into the cavity of the die a space is formed between a surface of the resin, which surface forms the normally visible side of the moulded product, and the corresponding surface of the die, a fluid medium being injected into said space to soften the skin-layer of the injected resin, pressure being applied to the resin in the die cavity to conform the resin to the surface of the die, the resin in the die cavity being thereafter cooled to set the resin, characterised in that the fluid medium being injected is carbon dioxide.

In a preferred embodiment, the formation of a skin layer on a surface of the resin adjacent a surface of the die is inhibited by forcing the softened skin layer into contact with the die cavity surface by increasing the pressure applied to the resin and cooling the moulded product to set the resin under the said pressure.

This invention is further described and illustrated by reference to the drawings and to the following examples forming preferred embodiments and illustrating the method of the invention in more detail. In the drawings:
Fig. 1 is an schematic view showing a gas injection device and a die for carrying out the method of this invention;
Fig. 2 is a diagrammatic view showing an embodiment of this invention in which the space is formed by the gas injection pressure;
Fig. 3 is a diagrammatic view showing an embodiment of this invention in which the space is formed by moving a die to the back;
Fig. 4 is a diagrammatic view showing moulded products obtained by injecting a gas from two positions; and
Fig. 5 is a diagrammatic view showing moulded products obtained by injecting a gas from one position.

The injection moulding method according to this invention is characterised in that, a space is formed forcefully and between the molten resin and the die surface on the normally visible side of the moulded product and immediately after the resin is injected. A fluid medium capable of softening the surface skin layer being carbon dioxide gas is injected and the space is formed while the gas is being injected. In this process, the glass transition point of the skin layer is lowered by dissolving the fluid medium into the skin layer formed on the visible surface of the moulded product while compressing the space portion. The skin layer is again pressed against the die surface and is solidified behind the holding pressure. As described above, the transcription, gloss level, and cosmetic appearance of moulded products can be improved without affecting the fluidity of a resin by forming the space immediately after the resin is injected. The said fluid medium is injected into this space for softening the skin layer and again adding a pressure to the skin layer for moulding. Further, by injecting the fluid medium with continuous increased pressure or step by step increased pressure, no adverse effect is produced on the skin layer immediately after the resin is injected even if the fluid medium is finally injected under a high pressure. Alternatively, the space can gradually be formed between the die surface and a skin layer immediately after a resin is injected. This space may be formed either by partially and slowly moving back a movable side die or a surface of the fixed side die opposite to the visible surface and at the same time injecting the fluid medium into the space, or by injecting the fluid medium after the back movement is stopped and a space between the resin and die surface is formed.

The thermoplastic resins used in this invention include, for instance, styrene-based resins (such as polystyrene, butadiene/styrene copolymer, acrylonitrile/styrene copolymer, acrylonitrile/butadiene/styrene copolymer), ABS resin, polyethylene, polypropylene, ethylene/propylene resin, ethylene-ethylacrylate resin, polyvinyl chloride, polyvinylidene chloride, polybutene, polycarbonate, polyacetal, polyphenylene oxide, polyvinyl alcohol, polymethyl methacrylate, saturated polyester resins (such as polyethylene terephthalate, polybutylene terephthalate), biodegradable polyester resins (such as hydroxycarboxylic acid condensate, condensates of diol and dicarboxylic acid such as polybutylene succinate), polyamide resin, polyimide resin, fluorine resin, polysulphone, polyether sulphone, polyacrylate, polyether ether ketone, a mixture of one or more types of crystalline liquid polymer, and a resin in which various types of inorganic or organic fillers are mixed. Of these thermoplastic resins, styrene-based resins and ABS resin are especially preferable.

The gas used in this invention is taken-up, absorbed or dissolved in a resin, and carbon dioxide gas having a high solubility for resin or a carbon dioxide gas in the supercritical state is to be used.

### Example 1

Embodiments of this invention and controls thereto are described in detail below with reference to the drawings, but it should be noted that this invention is not limited to these examples and that a combination of the examples is also included within a scope of this invention.

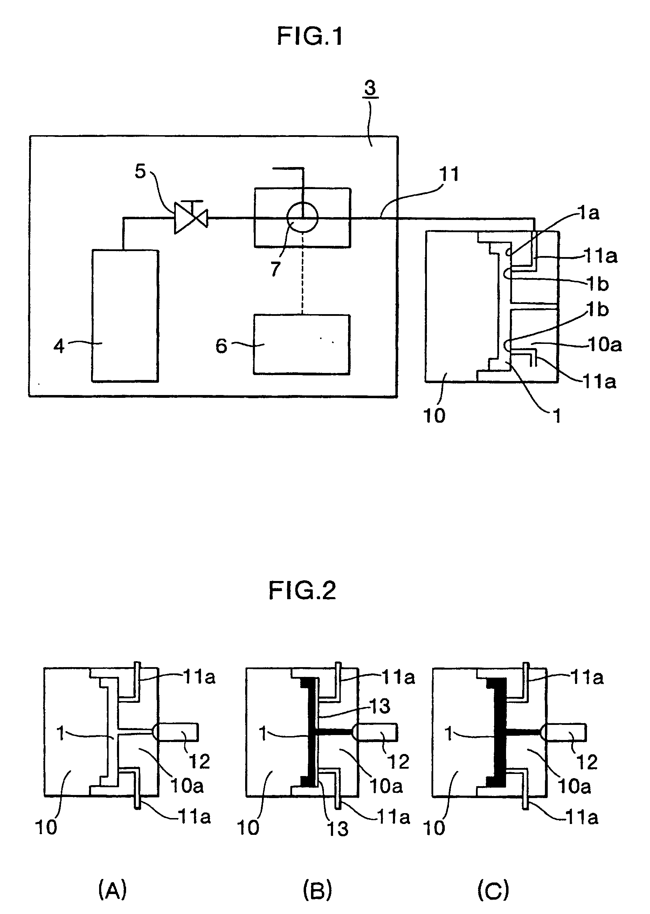

Fig. 1 shows a die and a carbon dioxide injector for carrying out this invention. The reference numeral 1 indicates a die cavity formed by assembling a fixed side die 10 and a movable side die 10a into the die, while the reference numeral 3 indicates a gas injector. The gas injector 3 comprises a gas tank 4 with a carbon dioxide gas injected therein, a gas injection line 11 connected to a gas injection circuit 11 a feeds two gas injection inlets 1b in the movable side die 10a and communicating with the die surface 1a being the visible side of the finished moulding. A gas pressure regulator 5 is included in the gas injection line 11 together with an electromagnetic switching control valve 7, and a control unit 6 for controlling the valve 7.

The injection moulding method according to this invention is described with reference to Figs. 2(A), (B), and (C).

The gas injector 3 shown in Fig. 1 is a product of the Applicants and the moulding machine used is manufactured by Nihon Seikosho K.K; under reference J220E2-P-2M. A clamping pressure of 220 t was used in the injection moulding machine. The used resin was high impact polystyrene produced by Idemitsu Petrochemicals; reference HT560. The moulded product had the dimensions 164 mm (length) x 74 mm (width) x 2.5 mm (thickness), and the moulded product had a form of a plate with a boss and a rib formed on the non visible surface. Molten resin for the moulding was injected into the cavity of the die under an injection pressure of 56 MPa, with a filling time of 0.6 sec. The molten resin temperature was 230° C and the temperature of the die cavity 1 (made of S45C) was set using chilled water to 18° C. After the molten resin was injected, carbon dioxide gas was injected through the gas injection inlets 1b into the space between the normally visible skin surface and the adjacent die surface 1a. The space 13 was then compressed by moving a plunger 12 forward to increase the resin pressure. And the visible skin surface was again pressed close to the die surface 1a in order to achieve dissolving the carbon dioxide gas in the skin surface to lower the glass transition point of skin surface. Holding pressure was added to the resin (C).

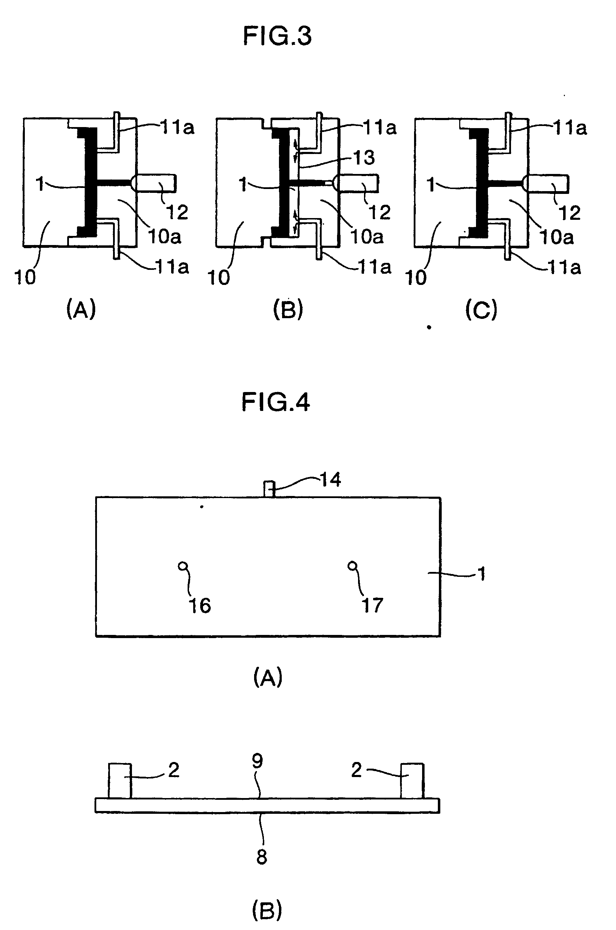

Referring to Figs. 3(A) to (C) in this moulding method, immediately after the molten resin was injected into the cavity, the movable side die 10a was moved back to release the clamping pressure in the die, while the space 13 with a space of about 0.1 mm forcefully formed between the skin layer on the visible surface and the die surface 1a (B). Carbon dioxide gas with the pressure set to 6.5 MPa was continuously injected from the gas injector 3 into the gas injection inlet 1 b for 2.0 seconds. The movable side die 10a was moved forward for clamping and a holding pressure of 90 MPa applied for 7 second,. The carbon dioxide gas was dissolved in the skin surface compressing the space 13 to lower the glass transition point of skin layer surface, and the skin layer again closely cohered to the die surface for moulding (C).

The carbon dioxide gas not dissolved in the skin layer is exhausted via a path in reverse to that for injection to the gas injector side 3.

The moulded product obtained as described above had excellent transcription and the result of the measurement of the gloss level of surface of the product with the Gloss Checker (produced by HORIBA Ltd. referenced IG-310) is shown in Table 1.

### Example 2

In this example the moulding is performed in the same way as that in Example 1 but excluding the point that the carbon dioxide gas was continuously or intermittently injected into the space 13 formed. The total time consumed for injecting the gas was 2.0 seconds, while exhaustion was executed for 0.2 seconds. In the case where gas injection was performed intermittently the operation was divided into four stages and an equal quantity of gas was injected in each stage. As a result, the moulded product obtained as described above had excellent transcription, and had an excellent glossy surface. The result of measurement of surface gloss level of the moulded product is shown in Table 1.

### Control 1

Moulding was performed in the same way but excluding the gas injection. As a result, the moulded product obtained as described above had a poor transcription as compared to that in Example 1 and it was confirmed that the gloss level of the moulded product was inferior to that obtained in Example 1. The result of measurement of the gloss level of the moulded product is shown in table 1.

### Example 3

In this example the moulding was performed in the same way but immediately after the molten resin was injected in the surface of the fixed side die contacting the visible side of the product was moved back to form the space 13 with the distance of about 0.1 mm between the resin and the die surface. The carbon dioxide gas was injected into this space 13 as in Example 1. After the carbon dioxide gas was dissolved in the resin surface (visible skin surface) of the visible side of the product, the die surface which had been moved back was again moved forward adding further pressure. The result of measurement of the gloss level of the moulded product is shown in Table 1.

### Control 2

Moulding was performed in the same way as that in Example 2 excluding the injection of carbon dioxide gas. As a result, it was confirmed that the moulded product obtained as described above had an inferior gloss level compared to that of the moulded product in Example 2. The result of the measurement of the gloss level of the moulded product is shown in Table 1.

### Example 4

Moulding was performed in the same way as that in Example 1 except that the gas injection inlet was provided at one point. It was confirmed that the moulded product obtained as described above had excellent transcription and surface gloss. The result of measurement of the surface gloss level of the moulded product is shown in Table 1.

**Table 1**

| | ***METHOD FOR FORMING THE SPACE*** | ***TYPE OF GAS*** | ***GAS PRESSURE*** | ***GAS INLET*** | ***GLOSS LEVEL*** |
|---|---|---|---|---|---|
| ***Example 1*** | Gas pressure | Carbon dioxide | Constant | 2 places | 84 |
| ***Example 2*** | Gas pressure | Carbon dioxide | Intermittent | 2 places | 86 |
| ***Example 3*** | Moving back the die surface | Carbon dioxide | Constant | 2 places | 86 |
| ***Example 4*** | Gas pressure | Carbon dioxide | Constant | 1 place | 85 |
| ***Control 1*** | | | | | 23 |
| ***Control 2*** | | | | | 23 |

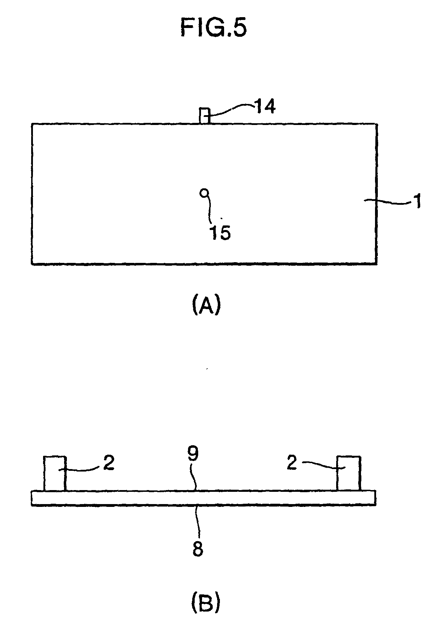

Fig. 4 and Fig. 5 show the moulded products obtained in the examples described above. In these figures a visible surface of the moulded product is designated as 8 and 9 is a non-visible surface thereof. A gate position 14 is shown in the moulded product and at 15 is the position of the inlet 1b when the gas is injected from one point. The reference numerals 16 and 17 are the positions of the inlets when gas is injected from two places.

In a further embodiment, immediately after a resin is injected into a die cavity, a space is formed between a surface of the die forming the visible surface side and the resin. The carbon dioxide fluid medium is dissolved only in the resin surface in the visible surface side of the product and the holding pressure is added, then exhausted with the residual fluid medium not having been dissolved in the resin. The softened surface of resin with the fluid medium having been dissolved therein is pressed against the die surface on the visible side of the product. By this process moulded products with excellent transcription, appearance and gloss level are obtained.

By forming a space between the resin injected in a die cavity and the die surface, there are provided advantages that the resin is thermally insulated and that the resin can be kept at a high temperature until transcription to the die surface is performed again by adding the holding pressure. Further by adding the holding pressure, the carbon dioxide fluid medium injected in the space is dissolved in the resin and the viscosity of the surface of the resin is lowered so that moulded products with excellent transcription only on the visible surface thereof can be obtained. Further by moving a portion of a die forward or backward, the transcription of the moulded products can be improved partially. In addition, it is possible to reduce flow lines generated at a joint between flowing resins and to eliminate such defects as a flow marks and a gas marks.

Description of the References used in the drawings:
- 1:: Moulded plastic product
- 2:: Boss section
- 3:: Gas injector
- 4:: High pressure gas generator or a gas tank
- 5:: Gas pressure adjuster
- 6:: Control unit
- 7:: Electromagnetic control valve
- 8:: Visible surface side of the moulded product
- 9:: Non-visible surface side of the moulded product
- 10:: Die for moulding
- 11:: Gas injection line
- 12:: Ram of the moulding machine
- 13:: Space formed
- 14:: Gate position in the moulded product
- 15:: Gas injection position in die cavity
- 16:: Gas injection position in die cavity
- 17:: Gas injection position in die cavity

## Claims

1. Process for improving the surface finish of an injection moulded plastics product wherein a molten plastics resin is injected into the cavity (1) of a heated moulding die (10, 10a), the die thereafter being cooled and the resin allowed to set after which the product is removed form the die, and wherein after injecting the resin into the cavity of the die a space (13) is formed between a surface of the resin, which surface forms the normally visible side of the moulded product, and the corresponding surface of the die (1a), a fluid medium being injected into said space (13) to soften the skin-layer of the injected resin, pressure being applied to the resin in the die cavity (1) to conform the resin to the surface of the die, the resin in the die cavity being thereafter cooled to set the resin, **characterised in that** the fluid medium being injected is carbon dioxide.

2. Process in accordance with Claim 1, **characterised in that** after the resin has been injected into the die cavity (1) the fluid medium is injected using a continuously increasing pressure or the pressure is increased stepwise.

3. Process in accordance with Claim 1 **characterised in that** after the resin has been injected into the die cavity (1) the fluid medium is injected from a plurality of injection points (16).

4. Process in accordance with Claim 1, **characterised in that** after the resin has been injected into the die cavity (1) the said space (13) is formed by injecting the fluid medium.

5. Process in accordance with Claim 1, **characterised in that** after the resin has been injected into the die cavity (1) the said space (13) is formed by moving back a movable part (10a) of the die adjacent to or opposite the normally visible surface of the moulded product.

6. Process in accordance with claim 1 **characterised in that** the softened skin layer is forced into contact with the die cavity surface (1a) by increasing the pressure applied to the resin to inhibit the formation of a skin layer on a surface of the resin adjacent a surface of the die, and cooling the moulded product to set the resin under the said pressure.

## Patentansprüche

1. Verfahren zur Verbesserung der Oberflächengüte eines Kunststoff-Spritzteils, bei dem ein geschmolzenes Kunststoffharz in den Hohlraum (1) einer erwärmten Spritzform (10, 10a) eingespritzt wird, wobei diese Spritzform dann abgekühlt wird und das Harz dabei aushärten kann, anschließend das Produkt aus der Spritzform entfernt wird, und bei dem nach der Harzeinspritzung in den Spritzformhohlraum ein Raum (13) zwischen einer Oberfläche des Harzes, welche die normalerweise sichtbare Seite des Spritzteils bildet, und der entsprechenden Oberfläche (1a) der Spritzform ein Raum (13) gebildet wird, wobei ein Fluid zur Weichmachung der Hautschicht des eingespritzten Harzes in den Raum (13) eingespritzt wird, wobei Druck auf das im Spritzformhohlraum (1) befindliche Harz angewandt wird, um das Harz an die Spritzformoberfläche anzupassen, wobei das im Spritzformhohlraum befindliche Harz anschließend zu dessen Aushärtung abgekühlt wird, **dadurch gekennzeichnet, dass** es sich bei dem eingespritzten Fluid um Kohlensäure handelt.

2. Verfahren nach Anspruch 1, **dadurch gekennzeichnet, dass** nach dem Einspritzen des Harzes in den Spritzformhohlraum (1) das Fluid unter Anwendung von kontinuierlich steigendem Druck bzw. schrittweise erhöhtem Druck eingespritzt wird.

3. Verfahren nach Anspruch 1, **dadurch gekennzeichnet, dass** nach dem Einspritzen des Harzes in den Spritzformhohlraum (1) das Fluid über eine Vielzahl von Einspritzpunkten (16) eingespritzt wird.

4. Verfahren nach Anspruch 1, **dadurch gekennzeichnet, dass** nach dem Einspritzen des Harzes in den Spritzformhohlraum (1) der genannte Raum (13) durch Einspritzen des Fluids gebildet wird.

5. Verfahren nach Anspruch 1, **dadurch gekennzeichnet, dass** nach dem Einspritzen des Harzes in den Spritzformhohlraum (1) der genannte Raum (13) durch Zurückbewegen eines beweglichen Teils (10a) der Spritzform in die Nähe oder gegenüber der normalerweise sichtbaren Oberfläche des Spritzteils gebildet wird.

6. Verfahren nach Anspruch 1, **dadurch gekennzeichnet, dass** die weichgemachte Hautschicht mit der Oberfläche (1a) des Spritzformhohlraums in Kontakt gedrängt wird, indem der auf das Harz angewandte Druck erhöht wird, um die Bildung einer Hautschicht auf einer Oberfläche des Harzes in der Nähe einer Oberfläche der Spritzform zu hemmen, und das Spritzteil abgekühlt wird, um das Harz unter dem genannten Druck aushärten zu lassen.

## Revendications

1. Procédé permettant d'améliorer le fini de surface d'un produit en matière plastique moulé par injection, dans lequel une résine plastique est injectée dans la cavité (1) d'un moule de moulage (10, 10a) chauffé, le moule étant ensuite refroidi et la résine autorisée à sécher, après quoi le produit est retiré du moule, et dans lequel après avoir injecté la résine dans la cavité du moule, un espace (13) est formé entre une surface de la résine, dont la surface forme le côté normalement visible du produit moulé, et la surface (1a) correspondante du moule, un milieu de fluide étant injecté dans ledit espace (13) pour ramollir la couche de peau de la résine injectée, la pression étant appliquée sur la résine dans la cavité (1) du moule pour conformer la résine à la surface du moule, la résine située dans la cavité du moule étant ensuite refroidie pour sécher la résine, **caractérisé en ce que** le milieu de fluide qui est injecté est du dioxyde de carbone.

2. Procédé selon la revendication 1, **caractérisé en ce qu'**après que la résine ait été injectée dans la cavité (1) du moule, le milieu de fluide est injecté en utilisant une pression augmentant de manière continue ou la pression est augmentée par palier.

3. Procédé selon la revendication 1, **caractérisé en ce qu'**après que la résine ait été injectée dans la cavité (1) du moule, le milieu de fluide est injecté à partir d'une pluralité de points d'injection (16).

4. Procédé selon la revendication 1, **caractérisé en ce qu'**après que la résine ait été injectée dans la cavité (1) du moule, ledit espace (12) est formé en injectant le milieu de fluide.

5. Procédé selon la revendication 1, **caractérisé en ce qu'**après que la résine ait été injectée dans la cavité (1) du moule, ledit espace (13) est formé en faisant reculer une partie mobile (10a) du moule adjacente à ou opposée à la surface normalement visible du produit moulé.

6. Procédé selon la revendication 1, **caractérisé en ce que** la couche de peau ramollie est forcée en contact avec la surface (1a) de la cavité du moule en augmentant la pression appliquée sur la résine pour empêcher la formation d'une couche de peau sur une surface de la résine, adjacente à une surface du moule, et en faisant refroidir le produit moulé pour sécher la résine sous la pression déterminée.
